# EUROPÄISCHE PATENTSCHRIFT

(11) **EP 1 585 629 B1**
(45) Veröffentlichungstag und Bekanntmachung des Hinweises auf die Patenterteilung: **28.03.2007**
(21) Anmeldenummer: 03772265.9
(22) Anmeldetag: 28.10.2003
(51) Int. Cl.: B29C 65/14, B29C 65/36, F15B 1/10, B29K 21/00, B29L 22/02

(54) **VERFAHREN ZUM HERSTELLEN EINER SPEICHERBLASE**
METHOD FOR PRODUCING AN ACCUMULATOR BLADDER
PROCEDE DE PRODUCTION D'UNE VESSIE D'ACCUMULATEUR

(30) Priorität: 22.01.2003 DE 10302256
(43) Veröffentlichungstag der Anmeldung: 19.10.2005
(73) Patentinhaber: HYDAC TECHNOLOGY GMBH, D-66280 Sulzbach (DE)
(72) Erfinder: BALTES, Herbert, 66679 Losheim (DE); KORT, Armin, 66292 Riegelsberg (DE)
(74) Vertreter: Bartels & Partner
(86) Internationale Anmeldenummer: PCT/EP2003/011920
(87) Internationale Veröffentlichungsnummer: WO 2004/065108

(56) Entgegenhaltungen:
- EP-A- 0 440 410
- EP-A- 0 803 344
- WO-A-98/05726
- DE-A- 2 136 656
- GB-A- 1 043 071
- GB-A- 1 087 815
- GB-A- 2 240 980
- US-A- 3 620 875
- US-A- 3 946 759
- US-A- 4 518 651
- US-A- 5 833 542
- US-A- 5 968 304
- US-A- 6 007 662
- US-A- 6 056 844

## Beschreibung

Die Erfindung betrifft ein Verfahren zum Herstellen einer Verbindung mit den Merkmalen des Oberbegriffes des Patentanspruches 1.

Eine der wesentlichen Hauptaufgaben von Hydrospeichern ist es, bestimmte Volumen unter Druck stehender Flüssigkeit (Hydraulikmedium) einer Hydroanlage aufzunehmen und diese bei Bedarf wieder an die Anlage zurückzugeben. Da sich die Flüssigkeit unter Druck befindet, werden die Hydrospeicher wie Druckbehälter behandelt und müssen für den maximalen Betriebsüberdruck unter Berücksichtigung der Abnahmestandards des Aufstellungslandes ausgelegt sein. Zum Volumenausgleich im Hydrospeicher und der damit verbundenen Energiespeicherung wird die Druckflüssigkeit im Hydrospeicher gewichts- und federbelastet oder mit Gas beaufschlagt. Dabei herrscht zwischen dem Druck der Druckflüssigkeit und dem vom Gewicht der Feder oder dem Gas erzeugten Gegendruck stets ein Gleichgewicht.

In den meisten Hydroanlagen werden hydropneumatische (gasbeaufschlagte) Hydrospeicher mit Trennelement eingesetzt, insbesondere Hydrospeicher mit einer sog. Speicherblase als Speicherort für das im Hydrospeicher bevorratete Arbeitsgas, meist in Form von Stickstoff. Eine dahingehende Hydrospeicher-Lösung ist beispielsweise durch die US-A-3 946 759 bekannt.

Die Speicherblase besteht vor ihrer eigentlichen Inbetriebnahme im Hydrospeicher regelmäßig aus zwei Speicherblasenteilen und wird insbesondere aus Acrylnitril-Butadien-Kautschuk (NBR) hergestellt. Zur Verbindung der beiden einander zugewandten freien Ränder der Speicherblasenteile werden die dahingehenden Wandteile von der Seite her angeschrägt, um dergestalt eine möglichst groß ausgebildete Verbindungsfläche zu erhalten und um insbesondere ein hohes Maß an Gasdichtheit der Speicherblase auch im Bereich dieser Verbindungsstelle sicherzustellen. An ihren spitz aufeinander zulaufenden Endseiten werden die Speicherblasenteile randseitig dann ineinandergeschoben und entlang der dahingehenden Naht- oder Verbindungsfläche mit einem üblichen Vulkanisationskleber als Verbindungsmittel, der vorzugsweise auf NBR-Basis aufgebaut ist, verbunden. Des weiteren vermeidet man durch den dahingehenden Aufbau die Festigkeit beeinträchtigende Steifigkeitssprünge und es wird eine glatte Außenwand für die Speicherblase erhalten.

Für die dahingehende Verbindung wird als Energiemedium eine Mikrowellenstrahlung benutzt und mittels der Mikrowellenstrahlung im Bereich der Verbindungsfläche wird dort Wärme zum Teil dem Verbindungsmittel in Form des Klebers als auch in den randseitigen Bereichen der Blasenteile selbst erzeugt. Vorzugsweise werden dabei für die Speicherblasenteile moderne Elastomerwerkstoffe eingesetzt, die es erlauben, unter dem Einfluß der Mikrowellenstrahlung Wärme zu erzeugen, um dergestalt die Aushärtezeit des Verbindungsmittels in Form des Vulkanisationsklebers zu verbessern, insbesondere zu verkürzen. Dergestalt läßt sich eine wirtschaftliche Fertigungszeit erhalten, die aber relativ betrachtet dennoch recht lang ist und insbesondere bei der Vielzahl an herzustellenden Speicherblasen gesamtfertigungstechnisch gesehen durchaus ins Gewicht fällt. Versuche, die Aushärtezeit des Verbindungsmittels durch einen erhöhten Ernergieeintrag über die Mikrowellenstrahlung zu erreichen, scheitern regelmäßig an der Empfindlichkeit der miteinander zu verbindenden Medien, die durch "Überheizen" geschädigt teilweise sogar verbrennen können. Ein zu niedriger Energieeintrag über die Mikrowellenstrahlung kann aber wiederum dazu führen, dass die Verbindungsnaht nicht in der notwendigen Güte oder Qualität hergestellt ist, was zu reduzierten Nahtfestigkeitswerten führt mit der Möglichkeit des Aufreißens der Nahtstelle, sofern der jeweilige Hydrospeicher in Betrieb genommen wird.

Durch die GB-A-2 240 980 ist bereits vorgeschlagen worden zum Herstellen einer Verbindung aus mindestens zwei Teilen aus vulkanisiertem Kautschukmaterial, diese mittels eines Verbindungsmittels entlang einer Verbindungsfläche unter der Einwirkung eines Energiemediums miteinander zu verbinden, wobei das Verbindungsmittel in der Art eines Klebstoffes ausgebildet, die zu verbindenden Teile aneinander hält, und als Energiespeichermedium des Verbindungsmittels finden chemische Stoffverbindungen Verwendung, die eine signifikante Mikrowellenabsorption ermöglichen. Neben schwarz gefärbten Karbonverbindungen wurden PbO₂, BaTiO₃, BaSO₄ sowie ZnO als praktisch anwendbar erkannt. Zum Herstellen der eigentlichen Verbindung sind aufgrund der "großen Molekülzusammensetzungen" des jeweiligen Energiespeichermediums zum einen sehr hohe Temperaturen notwendig sowie eine lange Verarbeitungszeit, was die bekannte Lösung für den Einsatz bei der Serienherstellung von Speicherblasen von Hydrospeichern untauglich erscheinen lässt. Auch kann nicht ausgeschlossen werden, dass es dergestalt zu einer Schädigung des zu verbindenden, empfindlichen Kautschukmateriales der Speicherblase kommt.

Ausgehend von diesem Stand der Technik liegt der Erfindung die Aufgabe zugrunde, ein Verfahren zum Herstellen einer Speicherblase für einen Hydrospeicher zu schaffen, das unter Beibehalten der Vorteile im Stand der Technik, wie eine hohe Prozeßsicherheit, es erlaubt, Nahtstellen einer hohen Güte zu erzeugen und darüber hinaus die Prozeßzeit für die Verbindung der Speicherblasenteile miteinander deutlich zu reduzieren. Eine dahingehende Aufgabe löst ein Verfahren mit den Merkmalen des Patentanspruches 1 in seiner Gesamtheit.

Dadurch, dass erfindungsgemäß das Energiespeichermedium aus nanopartikulären Speicherpartikeln mit einer Partikelgröße von 10 bis 50 Nanometer gebildet wird, die die gespeicherte Energie in Form von Wärme an ihre Umgebung abgeben ist erstmalig die Möglichkeit eröffnet, ohne größere Ausschußraten, die im Stand der Technik aufgezeigte Verbindungstechnik für Kautschukmaterialien unter Einsatz einer Hochenergiestrahlung, wie die bekannte Mikrowellenstrahlung auf die Serienherstellung von Speicherblasen für Hydrospeicher zu übertragen. Insofern ist eine hohe Prozeßsicherheit erreicht, die es erlaubt Nahtstellen mit einer hohen Güte für die in Rede stehenden Speicherblasen zu erzeugen.

Aufgrund des Einsatzes der nanopartikulären Speicherpartikel in der genannten Größenordnung lässt sich dergestalt die Wärmeerzeugung mit einer vorher wählbaren Prozeßtemperatur durchführen, was wiederum der Prozeßsicherheit zugute kommt und zum andern einen schädigenden Wärmeeintrag vermeiden hilft. Durch die insoweit vorgebbare Prozeßtemperatur kann es dann auch nicht passieren, dass durch zuwenig Wärmeeintrag die Nahtfestigkeit in schädigender Weise beeinträchtigt wird. Auch besteht die Möglichkeit, kurzzeitig eine relativ hohe Energiemenge einzuspeichern und über das Energiespeichermedium zeitnah abzurufen, so dass sich die Prozeßgeschwindigkeit für das Aushärten des Klebstoffmaterials (Verbindungsmittel) genau einstellen und insbesondere deutlich reduzieren läßt. Insbesondere bei der großtechnischen Herstellung einer Vielzahl an Speicherblasen lassen sich diese dann dergestalt bei hoher Qualität in kürzerer Zeit und damit kostengünstiger herstellen.

Das Energiemedium ist aus einer Mikrowellenstrahlung oder einem sonstigen elektromagnetischen Wechselfeld gebildet, insbesondere in Form von Hochfrequenzfeldern. Als nanopartikuläre Speicherpartikel haben sich als besonders geeignet solche in der Art von Ferriten erwiesen.

In Abhängigkeit des Anwendungsfalles können die nanopartikulären Speicherpartikel pulver-, pasten- oder fluidförmig aufgebracht werden. Das Energiespeicher- und Abgabevermögen des Energiespeichermediums läßt sich insbesondere über den Partikelwerkstoff, die Partikelgröße, die Partikelzusammensetzung und eine geeignete Klebstoffmatrix vorgeben, die die Partikel vorzugsweise fein dispergiert aufnimmt.

Im folgenden wird das erfindungsgemäße Verfahren anhand eines Ausführungsbeispiels nach der Zeichnung näher erläutert. Dabei zeigen in prinzipieller und nicht maßstäblicher Darstellung die
- Fig.1: einen Längsschnitt durch einen konventionellen Hydrospeicher;
- Fig.2: die aus zwei Speicherblasenteilen gebildete Speicherblase im Längsschnitt und die
- Fig.3: in vergrößerter Darstellung den Ausschnitt "X" nach der Fig.2.

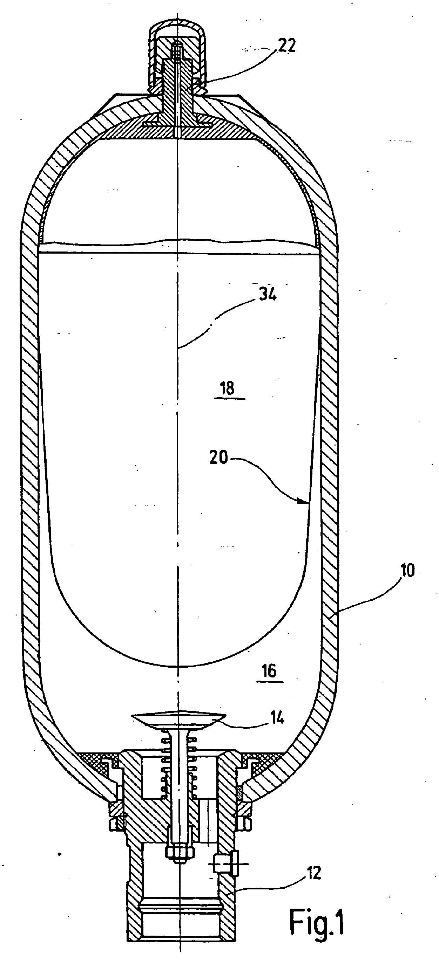

Der in Fig.1 dargestellte Hydrospeicher weist ein Speichergehäuse 10 auf, bestehend aus einem üblichen drucksicheren Metallwerkstoff. In Blickrichtung auf die Fig.1 gesehen weist der Hydrospeicher an seiner Unterseite eine Ventileinrichtung 12 mit einem sog. Ventilteller 14 auf. Über die dahingehende Ventileinrichtung 12 läßt sich der Hydrospeicher an ein nicht näher dargestelltes hydraulisches Gesamtsystem anschließen und über die Ventileinrichtung 12 mit Ventilteller 14 gelangt das Hydraulikmedium auf die Fluidseite 16 des Hydrospeichers. Die dahingehende Fluidseite 16 ist von einer Gasseite 18 des Hydrospeichers über eine als Ganzes mit 20 bezeichnete Speicherblase getrennt. Die dahingehende Speicherblase 20 bevorratet das Arbeitsgas des Hydrospeichers, wobei regelmäßig Stickstoff als Arbeitsgas zum Einsatz kommt. An der Oberseite der Speicherblase 20 ist ein Gasventilkörper 22 einvulkanisiert, über den es möglich ist, die Gasseite 18 des Hydrospeichers mit dem Arbeitsgas nachzubefüllen, was von Zeit zu Zeit notwendig ist, da das Arbeitsgas über die Speicherblase 20 regelmäßig aus Acrylnitril-Butadien-Kautschuk (NBR) gebildet hindurchdiffundiert. Der dahingehende Aufbau von Hydrospeichern ist üblich, so dass an dieser Stelle hierauf nicht mehr näher eingegangen wird.

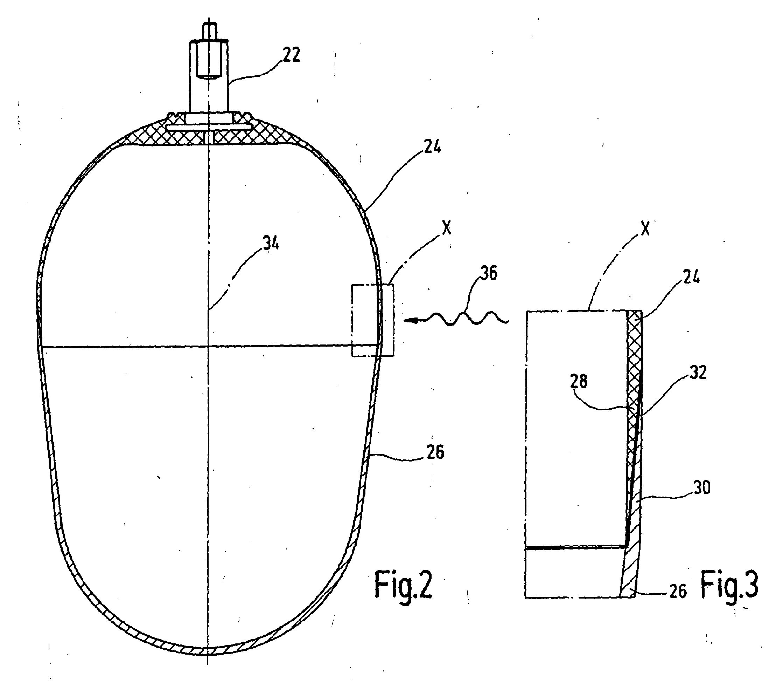

Wie insbesondere die Darstellungen nach den Fig.2 und 3 zeigen, besteht die Speicherblase 20 aus zwei Speicherblasenteilen 24,26. Die genannten Speicherblasenteile 24,26 sind sphärisch ausgebildet und entlang ihrer benachbarten Ränder 28,30 entlang von diesen miteinander verbunden. Zur Bildung einer gemeinsamen Verbindungsfläche 32 in der Art einer Naht sind die einander zugewandten Ränder 28,30 jeweils schrägverlaufend angeordnet, um dergestalt eine entsprechend groß dimensionierte Verbindungsfläche 32 zur Verfügung stellen zu können. Dabei ist in Blickrichtung auf die Fig. 2 und 3 gesehen der obere Speicherblasenteil 24 mit seinem schrägverlaufenden Rand 28 in den randseitigen Bereich des zweiten Speicherblasenteils 26 eingebracht und der spitz zulaufende Randbereich des zweiten Randbereichs 30 stützt sich in Richtung der sonstigen Außenumfangsfläche des ersten Speicherblasenteils 24 ab. Entsprechend erfolgt die weitere Abstützung des ersten Randes 28 an der Innenumfangsseite des zweiten Speicherblasenteils 26. Insgesamt ergibt sich also eine konisch verlaufende Verbindungsfläche 32, wobei die konischen Flächen in Richtung der Längsachse 34 zu der Unterseite der Speicherblase 10 hin orientiert sind.

Zum Herstellen der genannten Speicherblase 20 werden die genannten Speicherblasenteile 24,26 entlang ihrer Verbindungsfläche 32 mittels eines Verbindungsmittels verbunden, vorzugsweise in Form eines Vulkanisationsklebers auf Acrynitril-Butadien-Kautschuk-Basis (NBR). Die dahingehende Verbindung mittels des Klebstoffes als Verbindungsmittel erfolgt unter der Einwirkung eines Energiemediums 36, das in der Fig.2 mit einem Pfeil symbolhaft wiedergegeben ist. Als Energiemedium 36 kommt eine Mikrowellenstrahlung in Frage oder sonstige elektromagnetische Wechselfelder, insbesondere in Form von Hochfrequenzfeldern (HF). Die Einrichtungen zum Aufbringen eines dahingehenden Energiemediums 36 sind üblich und im Stand der Technik hinreichend beschrieben, so dass an dieser Stelle hierauf nicht mehr näher eingegangen wird.

Das Verbindungsmittel, insbesondere in Form eines Vulkanisationsklebers, weist ein Energiespeichermedium auf, das die vom Energiemedium 36 eingebrachte Energie zumindest teilweise speichert und wieder an das Verbindungsmittel abgibt. Das Energiespeichermedium (nicht dargestellt) besteht aus nanopartikulären Speicherpartikeln, die die eingebrachte Energie speichern und in Form von Wärme an ihre Umgebung, sprich an das Verbindungsmittel wieder abgeben können. Als nanopartikuläre Speicherpartikel können insbesondere Ferrite eingesetzt werden, insbesondere in einer Partikelgröße von 10 bis 50 Nanometer, und die nanopartikulären Speicherpartikel lassen sich einem Pulver, einer Paste oder einem Fluid in geeigneter Menge beifügen. Vorzugsweise ist dabei vorgesehen, dass die genannten Speicherpartikel fein dispergiert in der eigentlichen Klebstoffmatrix verteilt werden. Im fluidischen Zustand lassen sich die genannten Speicherpartikel als sog. Ferrofluid ausbilden, wobei es sich dann um stabile magnetische Ferritdispersionen in wässrigen oder organischen Lösemitteln handelt.

Sofern die Mikrowellen auf die Verbindungsfläche 32 eingestrahlt werden, absorbieren die Speicherpartikel zunächst die Energie, wobei sie sich erwärmen. Die dahingehende Wärme wird umgekehrt wieder an den Klebstoff abgegeben, der sich so zeitgenau verfestigt und die fluid- und gasdichte Verbindung zwischen den beiden Rändern 28,30 der beiden Speicherblasenteile 24 bzw. 26 herstellt. Da die Wärme direkt in der Klebstoffschicht freigesetzt wird, sinkt die Aushärtezeit im Vergleich zu dem sonstigen Mikrowellenverfahren deutlich, so dass sich eine schnelle Verklebung ergibt bei gleichzeitigem Überhitzungsschutz. Über den eingesetzten Partikelwerkstoff, die Partikelgröße, die Partikelzusammensetzung sowie die geeignete Auswahl einer Klebstoffmatrix läßt sich das Energiespeicher- und Abgabevermögen genau einstellen, so dass sich gezielt die Klebstoffverbindung der beiden Speicherblasenteile 24,26 vornehmen läßt.

Es hat sich auch gezeigt, dass durch einen späteren erhöhten Energieeintrag, beispielsweise aufgebracht durch die Mikrowellenstrahlung, sich über das nanopartikuläre Ferritmaterial die Verbindung auch wieder lösen läßt, um beispielsweise Reparatur- oder Austauschvorgänge an der Speicherblase 20 selbst vornehmen zu können. Da sich mit der neuen Verbindungstechnik die Taktzeiten für die Hydrospeicherherstellung, insbesondere für den Speicherblasenaufbau, deutlich reduzieren lassen, sind etwaige Mehrkosten für das Ferritmaterial durch die reduzierten Herstellkosten jedenfalls vollumfänglich gedeckt.

Des weiteren kann der zu verbindende Werkstoff der Speicherblasenteile ganz oder zumindest teilweise aus Isobuten-Isopren-Kautschuck (IIR), aus einem Terpolymer aus Ethylen-Propylen und einem Dien (EPDM), aus Kautschuck mit Fluor- und Fluoralkyl- oder Fluoralkoxy-Gruppen an der Polymerkette (FPM) sowie gegebenenfalls aus einem Epichlorhydrin-Copolymer (ECO) bestehen.

## Patentansprüche

1. Verfahren zum Herstellen einer Verbindung, die aus mindestens zwei Teilen (24,26) gebildet wird, die mittels eines Verbindungsmittels entlang einer Verbindungsfläche (32) unter der Einwirkung eines Energiemediums (36) miteinander verbunden werden, wobei das Verbindungsmittel ein Energiespeichermedium aufweist, das die vom Energiemedium (36) eingebrachte Energie zumindest teilweise speichert und wieder an das Verbindungsmittel abgibt, und wobei das Energiemedium (36) aus einer Mikrowellenstrahlung oder aus elektromagnetischen Wechselfeldern, insbesondere in Form von Hochfrequenzfeldern, gebildet wird, **dadurch gekennzeichnet, dass** die mindestens zwei miteinander zu verbindenden Teile (24, 26) die Bestandteile (24, 26) einer Speicherblase (20) für einen Hydrospeicher sind und dass das Energiespeichermedium aus nanopartikulären Speicherpartikeln mit einer Partikelgröße von 10 bis 50 Nanometer gebildet wird, die die gespeicherte Energie in Form von Wärme an ihre Umgebung abgeben.

2. Verfahren nach Anspruch 1, **dadurch gekennzeichnet, dass** als nanopartikuläre Speicherpartikel Ferrite eingesetzt werden.

3. Verfahren nach Anspruch 1 oder 2, **dadurch gekennzeichnet, dass** die nanopartikulären Speicherpartikel eine pulver-, eine pasten- oder eine fluidförmige Konsistenz aufweisen.

4. Verfahren nach einem der Ansprüche 1 bis 3, **dadurch gekennzeichnet, dass** die Speicherblasenteile (24,26) aus Acrylnitril-Butadien-Kautschuk gebildet werden und dass das Verbindungsmittel aus Teilen der Speicherblase (20) selbst und/oder aus einem Klebstoffmaterial gebildet wird.

5. Verfahren nach einem der Ansprüche 1 bis 4, **dadurch gekennzeichnet, dass** das Energiespeicher- und -abgabevermögen des Energiespeichermediums eingestellt wird, insbesondere über den Partikelwerkstoff, die Partikelgröße, die Partikelzusammensetzung und eine Klebstoffmatrix, die die Speicherpartikel, vorzugsweise fein dispergiert, aufnimmt.

6. Verfahren nach einem der Ansprüche 1 bis 5, **dadurch gekennzeichnet, dass** die Verbindungsfläche (32) aus den schrägverlaufenden Nahtstellen (28,30) der miteinander zu verbindenden Speicherblasenteile (24,26) gebildet wird.

## Claims

1. Method for producing a connection formed from at least two parts (24, 26) which are connected with each other by means of a connection means along a connection surface (32) under the influence of an energy medium (36), whereby the connection means comprises an energy storage medium which stores the energy supplied by the energy medium (36) at least in part, and supplies the same in turn to the connection means, and whereby the energy medium (36) takes the form of microwave radiation or electromagnetic alternating fields, in particular in the form of high frequency fields, **characterised in that** the at least two parts (24, 26) that are to be connected with each other consist of the parts (24, 26) of a storage bladder (20) for a hydro store, and **in that** the energy storage medium consists of nanoparticular storage particles with a particle size of 10 to 50 nanometres which supply stored energy in the form of heat to their surroundings.

2. Method according to Claim 1, **characterised in that** ferrite is used for the nanoparticular storage particles.

3. Method according to Claim 1 or 2, **characterised in that** the nanoparticular storage particles are of a powder-, a paste-, or a fluid-like consistency.

4. Method according to one of the Claims 1 to 3, **characterised in that** the storage bladder parts (24, 26) consist of acryl nitrile butadiene rubber, and **in that** the connection means is formed from parts of the storage bladder (20) itself and/or from an adhesive material.

5. Method according to one of the Claims 1 to 4, **characterised in that** the energy storage and supply capacity of the energy storage medium is adjusted, in particular with the aid of the particle material, the particle size, the particle composition, and an adhesive matrix which absorbs the storage particles, preferably finely dispersed.

6. Method according to one of the Claims 1 to 5, **characterised in that** the connection surface (32) is formed from the diagonally expanding seams (28, 30) of the storage bladder parts (24, 26) that are to be connected with each other.

## Revendications

1. Procédé de production d'une liaison qui est formée d'au moins deux parties (24, 26), lesquelles sont reliées entre elles au moyen d'un agent de liaison le long d'une surface (32) de liaison sous l'effet d'un milieu (36) d'énergie, l'agent de liaison comportant un milieu d'emmagasinage de l'énergie qui emmagasine au moins en partie l'énergie apportée par le milieu (36) d'énergie et la recède à l'agent de liaison et dans lequel le milieu (36) d'énergie est formé d'un rayonnement micro-ondes ou de champs alternatifs électromagnétiques, notamment sous la forme de champs de haute fréquence, **caractérisé en ce que** les au moins deux parties (24, 26) à relier entre elles sont les constituants (24, 26) d'une vessie (20) d'un hydroaccumulateur et **en ce que** le milieu d'emmagasinage de l'énergie est formé de particules d'accumulation nanoparticulaires ayant une dimension de particule de 10 à 50 nanomètres qui cèdent l'énergie emmagasinée sous la forme de chaleur à ce qui les entoure.

2. Procédé suivant la revendication 1, **caractérisé en ce que** l'on utilise des ferrites comme particules d'accumulation nanoparticulaires.

3. Procédé suivant la revendication 1 ou 2, **caractérisé en ce que** les particules d'accumulation nanoparticulaires ont une consistance poudreuse, pâteuse ou sont sous forme de fluide.

4. Procédé suivant l'une des revendications 1 à 3, **caractérisé en ce que** les parties (24, 26) de vessie d'accumulateur sont en caoutchouc acrylonitrile-butadiène et **en ce que** l'agent de liaison est formé de parties de la vessie (20) soi-même de l'accumulateur et/ou d'une matière adhésive.

5. Procédé suivant l'une des revendications 1 à 4, **caractérisé en ce que** l'on règle le pouvoir du milieu d'emmagasinage d'énergie d'emmagasiner de l'énergie et de la céder, notamment par le matériau des particules, par la dimension des particules, par la composition des particules et par une matrice de colle qui prend les particules de l'accumulation, de préférence à l'état finement dispersé.

6. Procédé suivant l'une des revendications 1 à 5, **caractérisé en ce que** la surface (32) de liaison est formée sur les points (28, 30) de joint inclinés des parties (24, 26) à relier entre elles de la vessie d'accumulateur.
